(19) Europäisches Patentamt
European Patent Office
Office européen des brevets

(11) Publication number: **0 183 608**
**A2**

(12) # EUROPEAN PATENT APPLICATION

(21) Application number: 85402233.2

(22) Date of filing: 19.11.85

(51) Int. Cl.⁴: G 06 F 1/00

(30) Priority: 19.11.84 US 672779

(43) Date of publication of application: 04.06.86 Bulletin 86/23

(84) Designated Contracting States: DE FR GB IT NL

(71) Applicant: SCHLUMBERGER TECHNOLOGY CORPORATION
5000 Gulf Freeway
Houston Texas 77023(US)

(72) Inventor: Dollhoff, Terry L.
11 Lisa Drive
Nashua New Hampshire 03062(US)

(72) Inventor: Barton, Brian F.
4785 East Joy Road
Ann Arbor Michigan 48105(US)

(72) Inventor: Goen, William J.
38315 South Rickham
Westland Michigan 48185(US)

(72) Inventor: van Dyke, Phillip L.
9204 Ascot
Ypsilanti Michigan 48197(US)

(72) Inventor: Hansen, Harold R. Jr.
1535 Glastonbury Road
Ann Arbor Michigan 48103(US)

(74) Representative: Chareyron, Lucien
Schlumberger Limited Service Brevets c/o Giers 12, place des Etats Unis B.P. 121
F-92124 Montrouge Cédex(FR)

(54) **Software security system.**

(57) A security system is provided which provides security to selected software to prevent such software from being executed on an unauthorized computer system. The security system includes active electronic circuitry mounted within the connecting end of a standard computer cable and adapted for receiving a first predetermined information pattern from the host computer and for transmitting a second predetermined information pattern back to the host computer in response thereto. The second predetermined information pattern is compared to a validation pattern within the memory of the host computer and if a match occurs, execution of the software continues. If a match does not occur, execution of the software to be protected is terminated. The security system requires no modification of the hardware of the host computer and is user transparent.

EP 0 183 608 A2

./...

FIG.1

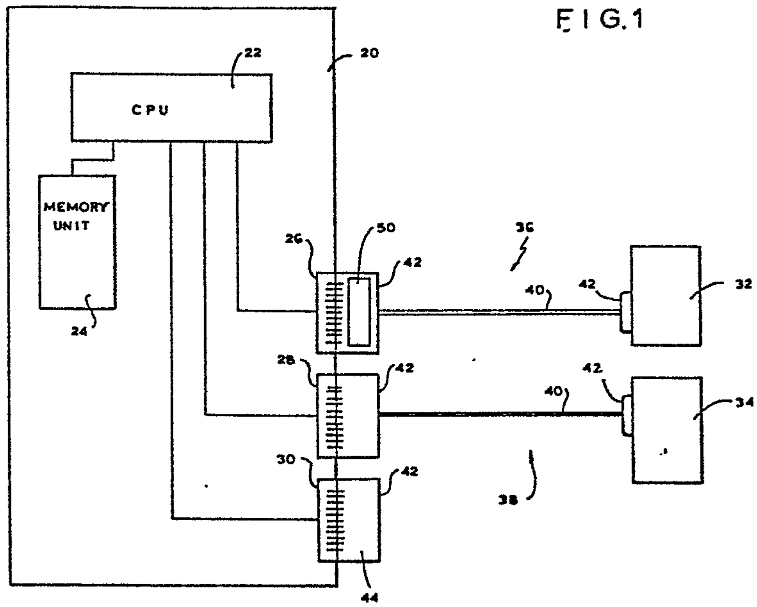

# SOFTWARE SECURITY SYSTEM

## Field of the Invention

The invention relates generally to controlling unauthorized use of computer software, and more particularly to a software security system which links selected computer software to use with only prescribed computer hardware.

## Discussion of the Technical Problem

The problem of controlling the use of licensed computer software has been a longstanding concern in the industry and a wide variety of solutions has been suggested. For example, in U.S. Patent No. 4,120,030, a software security system is disclosed which prevents a user from effectively reproducing or copying a program by scrambling the data addresses in the program before it is provided to the user, and by incorporating into the memory hardware of the computer unscrambling circuitry which reverses the scramble. The unscrambling circuitry is mounted on the data memory unit of the host computer and is encapsulated therewith to prevent examination and electrical interrogation.

Similar software security systems which require additions and adaptations to the internals of the computer hardware are disclosed in U.S. Patent Nos. 3,996,449; 4,168,396 and 4,246,638. While such systems may be viable for software licensors that also provide customized hardware which is to be dedicated to the use of only their selected software, such security systems are not practical for the larger group of software suppliers that do not supply customized, dedicated hardware. For such software licensors that provide programs to run on general purpose, "off-the-shelf" computer hardware, a different solution to the problem of preventing the unauthorized use of a program upon a similar machine of another is needed.

A different approach to the problem of software security is disclosed in U.S. Patent No. 3,609,697, in which a peripheral code generating device is connected to a general purpose computer at an input/output port of the system. The code generating device provides a unique and predetermined output code to the host computer in response to a signal initiated by the software which is to be protected. The output code is periodically compared with identification information located within the software, and if a match is not registered, a jump operation is performed which prevents further execution of the software by that hardware. Thus, the software cannot be executed except on hardware which includes a specific code generating device provided with the software. This approach to the problem of software security is useful to the supplier of software that is intended to be used on an "off-the-shelf" computer system. However, there are limitations to such a security system which make it susceptible to tampering and avoidance, and which makes it objectionable to the software customer. For example, because this system incorporates a separate peripheral "black box" which must be connected to the computer at a dedicated input/output port before selected software can be executed, the function of the code generating device can be readily inferred by any software licensee. Any licensee having sufficient technical sophistication and the inclination to do so is likely to be able to bypass the security system. In addition, such a security system is likely to be objectionable to a licensee who is not interested in unauthorized use of the software because the code generating device requires the dedication of one of the limited number of available input/output ports of the host computer, and requires an external source of electrical power, thereby restricting the licensee's ability to fully utilize the capacity of the hardware system. It would be desirable to have a software security system which avoids these limitations of prior art systems.

## Summary of the Invention

The present invention provides a software security system which can be employed conveniently with software which is to be used with general purpose, off-the-shelf computer hardware. Such hardware need not be dedicated only to the use of the supplier's software, nor must it be internally modified for security purposes. Additionally, the security system of the present invention is user-transparent, such that software customers who are using the licensed software in the authorized manner will be completely unaware of the presence of the security system. Indeed, even those software customers who are thwarted in an attempt to use the licensed software on unauthorized hardware are unlikely to readily determine the source of the software security, because no additional components and no external supply of electrical power is evident during operation of the present security system. Finally, the present software security system does not require the dedication of one of the limited number of input/output ports of the hardware system.

This result and other benefits are attained in accordance with one aspect of the invention by a device adapted for use in connecting an input/output (I/O) port of a data processing unit with a descrete peripheral device of a computer system. The device includes communication cable facilities having a connector member at an end portion of the cable facility for interconnecting the peripheral device to the I/O port to transmit electrical signals therebetween. Electronic circuitry is conveniently mounted within the communication cable facility and is electrically coupled therewith. Active electronic elements within the electronic circuitry are provided for recognizing a first predetermined electrical information pattern transmitted to the communication cable facility from the data processing unit. The active electronic elements generate and transmit a second predetermined electrical information pattern along the communication cable facility in response to the first information pattern. Within the data processing unit, the second information pattern may be compared to a validation electrical information pattern established by the computer software in order to verify that such software is being operated on an authorized computer system.

## Description of the Figures

Figure 1 is a simplified block diagram illustrating a computer system incorporating the software security system of the present invention.

Figure 2 is a schematic circuit diagram illustrating the software security system of the present invention as it is preferably electrically connected to a standard RS-232 interface of the computer system shown in Figure 1.

Figure 3 is a detailed, exploded view of the software security system of the present invention as it is preferably mounted within a standard computer cable connector assembly.

Figure 4 is a logic flow chart illustrating the operation of the present invention.

## Description of the Preferred Embodiments

With reference to Figure 1, a simplified block diagram of a computer system incorporating the software security system of the present invention is shown, including a host computer 20 having generally a central processing unit (CPU) 22, a memory unit 24, and a plurality of input/output (I/O) ports 26, 28 and 30. I/O ports 26, 28 and 30 are provided to permit communication between host computer 20 and peripheral devices 32 and 34, e.g., plotters, other computers, terminals, etc, through cable systems 36 and 38, respectively. As will be described more fully below, cable systems 36 and 38 generally include a cable 40 having connector assemblies 42 at both ends thereof. In a preferred embodiment of the invention, a standard RS-232 interface system is utilized between host computer 20 and peripherals 32 and 34, with connector assemblies 42 connecting to I/O ports 26, 28 and 30 through a plurality of pins 44, each of which are by convention accorded specified functions. Additional information concerning the RS-232 interface system may be found in an engineering standard published by the Electronic Industries Association concerning the subject.

As shown schematically in Figure 1, a software security device 50 according to the present invention is conveniently provided within one of connector assemblies 42 intermediate an I/O port and the communication cable 40. According to the invention, security device 50 does not require the dedication of any of the limited number of I/O ports 26, 28 and 30 to the security function, but rather shares one of the I/O ports with another function by being fully incorporated within the connector assembly 42 of an otherwise standard RS-232 compatible cable assembly 36 or 38. Because security device 50 does not require its own I/O port or power supply, and because it is physically hidden from view within the connector assembly 42, security system 50 is rendered effectively transparent to users.

Of course it will be appreciated that the present invention is not limited to any particular host computer 20, but may be used with a wide variety of commercially available host computers such as the Texas Instruments Professional Computer, Data General's Workstation Model 10, the Motorola VME-10 and the Hitachi B16. Likewise, the invention is not limited to use with the RS-232 interface system, and such system is referred to herein merely to better illustrate the practice of the invention.

With reference also to Figure 3, connector assembly 42 generally includes a standard 25 pin RS-232 connector 62, upper and lower housings 64 and 66, respectively, and appropriate fasteners 68. According to the present invention, a small printed circuit board 70 is introduced into connector assembly 42 with the electrical contact pads 71 adjacent one end thereof inserted and secured between the two rows of pins 63 of connector 62. A multiplexer integrated circuit 72 of the 74C157 type commercially available from a number of different sources, four 1N914 diodes 74, 76, 78 and 80 and two 1 K resistors 82 and 84 are mounted on board 70 to form the electrical circuit schematically represented in Figure 2.

It is common practice in using the RS-232 interface system that a substantial number of the 25 pins 63 of connector 62 would not be utilized in any particular interconnection of host computer 20 to a peripheral device. As shown in Figure 2, the present invention utilizes a number of otherwise unused pins to transfer signals into and out of software security circuitry 50. Although not limiting to the invention, one such set of pins is shown as an example in Figure 2, with the pin numbers shown corresponding to the pin numbers conventionally used in the RS-232 interface system. As represented in Figure 2, pins #2 and #3 are shown in use as input/output connectors in communication with the peripheral device through cable 40. Pins #23, #20 and #4 may commonly be utilized to transmit signals from host computer 20 to the software security circuitry 50, and pins #8, #6 and #22 may be utilized to transmit signals back toward host computer 20 in response thereto. Of course, the particular pins which are available in a given computer system may vary and the designer will desire to select appropriate unused pins to practice the present invention.

As shown in Figure 2, I/O port 26 continues to perform its primary function of transmitting and receiving data along communication cable 40, e.g., by utilizing pins #2 and #3 of connector 62 for outgoing and incoming serial data transmission, respectively. Such serial data transmission may pass through printed circuit board 70, or alternatively (and as best shown in Figure 3), electrical leads 90 and 92 may conveniently bypass circuit board 70 and connect directly to pins #2 and #3. Electrical lead 94 of Figure 3 is provided to connect to board 70 and therethrough to pin #7 of connector 62 to ground, as shown schematically in Figure 2.

Software security circuitry 50 is conveniently mounted inside standard connector assembly 42 such that the presence of security circuitry 50 is not visually apparent to the user. To further enhance the level of security provided by security circuitry 50, it is preferred that all identifying markings on integrated circuit 72 be removed and further that the housings 64 and 66 of connector assembly 42 be permanently secured together, e.g., by epoxying fasteners 68 and/or the mating edges of the upper and lower housings 64 and 66.

With reference also to Figure 4, a flow chart is provided to illustrate a form of software implemented logic which is useful in the practice of the invention. A software module is provided within the memory unit 24 of the host computer 20 which periodically directs that host computer 20 send out a predetermined sequence of parallel 2-bit patterns (the "inquiry pattern") to pins #4 and #23 of the RS-232 connector 62. After receiving the inquiry pattern, security system 50 returns to host computer 20 a parallel 3-bit pattern from pins #6, #8 and #22 for confirmation (the "confirmation pattern"). The software module directs host computer 20 to compare the confirmation pattern with an expected pattern stored in memory unit 24, and if a match occurs, program execution will continue. If the confirmation pattern does not match the expected pattern, or if a confirmation pattern is not received, execution of the program is terminated and a message may be displayed indicating an invalid hardware configuration.

The flow chart of Fig. 4 illustrates such a logic system. Upon the initiation of the security routine as represented in block 110, the inquiry pattern or a portion thereof is retrieved from a table in memory, as represented in block 112. At block 114, if an indication that the end of table has not been reached is received, the sequence advances to block 116. If the end of the table has been reached, the system branches to block 126.

In block 116, the inquiry pattern is sent from the host computer 20 to the security device 50. In block 118 the security device 50 returns the confirmation pattern to host computer 20. Block 120 represents the step of comparing the returned confirmation pattern to an expected pattern stored in a table in memory. Block 122 performs the logical step of determining if the compared patterns matched and if not, indicating that an invalid hardware configuration was in use, as shown in block 124. If the compared patterns matched, the system loops back from block 122 to block 112 for a continuation of the process if additional portions of the inquiry pattern remain in the table in memory; or if the full inquiry pattern has been utilized, to signal that a valid hardware configuration is in use at block 126.

As shown in Figure 2, when pin #23 is available for use, it is preferred that the 2-bit inquiry pattern be transmitted from pins #4 and #23 of RS-232 connector 62 and a constant "high" signal may be transmitted to IC 72 from pin #20 to supply the necessary power thereto. To implement this embodiment of the invention, a cut may be made in connector 100, e.g., at point 102, prior to assembly of the final device to isolate pins #20 and #23. In this configuration with pin #20 serving as a constant source of power to IC 72, patterns of four distinct binary inquiry signals can be generated from pins #4 and #23 (0,0; 0.1; 1,0; 1,1) to communicate with security system 50. This embodiment of the invention is preferred with the Texas Instruments Professional Computer.

For other host computers 20 for which pin #23 is either utilized or otherwise unavailable for use, the inquiry pattern is preferably transmitted from pins #4 and #20 of RS-232 connector 62. However, because no separate pin is provided to serve as a constant source of power to IC 72, the signal from one of pins #4 and #20 must remain in the high state to provide power. Accordingly, in this embodiment of the invention, patterns of only three distinct binary inquiry signals can be generated. To isolate pin #23 from IC 72 in this embodiment, it is preferred that a cut is made at point 104 adjacent pin #23 prior to the assembly of the final device.

In the preferred embodiment of the invention, integrated circuit 72 is fabricated in CMOS technology so that security circuitry 50 can be powered by the signals provided by the RS-232 connector 62 without requiring an outside source of electrical power. This feature of the invention contributes to the transparent nature of security system 50. Of course the invention is not limited to the particular 74C157 IC which was described above for purposes of illustrating the invention, as a wide variety of integrated circuits, e.g., ROMs, is available which can perform the desired function of receiving a predetermined inquiry signal and returning a predetermined confirmation signal. Likewise, the invention is not limited to the use of a 2-bit parallel inquiry signal and/or a three-bit parallel confirmation signal, as it will be apparent to those skilled in the art that many different sets and types of inquiry and confirmation signals could be utilized in the practice of the present invention.

In addition, it will be apparent to those skilled in the art that security system 50 can be conveniently employed within a connector assembly 42 even in situations where a communication cable system 36 or 38 is not required. For example, in Figure 1 security circuitry 50 could easily be disposed within the connector assembly 42 which is secured to I/O port 30 without sacrificing the transparency of the security system, because it is not uncommon that a connector assembly 42 is needed for each I/O port of a host computer, even if peripheral devices are not to be connected thereto. Accordingly, the invention is not limited to use with only those computer systems which include peripheral devices. Rather, the scope of the invention is intended to be limited only by the claims appended hereto.

What is claimed is:



1. A device for use in connecting an input/output port of a data processing unit with a discrete peripheral device in a computer system while providing security to selected software to be used with said computer system, the device comprising:

communication cable means having connector means at an end portion of said cable means for interconnecting said peripheral device to said input/output port to transmit electrical signals therebetween; and characterized by

electronic circuitry means mounted in said communication cable means and electrically coupled therewith, said electronic circuitry means including active electronic elements for recognizing a first predetermined electrical information pattern transmitted along said communication cable means and for generating and transmitting a second predetermined electrical information pattern along said communication cable means in response to said first predetermined electrical information pattern; wherein said second predetermined electrical information pattern may be compared to a validation electrical information pattern established by software, the use of which is to be controlled to verify that said software is being operated on an authorized computer system.

2. The device as set forth in Claim 1, characterized in that said active electronic elements are electrically powered by said first predetermined electrical information pattern and function independently of other external sources of electrical power.

3. The device as set forth in Claim 1 or 2, characterized in that said active electronic elements are fabricated from low power integrated circuitry.

4. The device as set forth in any of Claims 1 to 3, characterized in that said electronic circuitry means is mounted in said communication cable means in a visually undetectable manner without affecting the communication providing function of said cable means.

5. The device as set forth in any of Claims 1 to 4, characterized in that said electronic circuitry means is mounted within said connector means.

6. The device as set forth in any of Claims 1 to 5, characterized in that said first predetermined electrical information pattern comprises a parallel multiple-bit signal and wherein said second predetermined electrical information pattern comprises a parallel multiple-bit signal different from said first predetermined electrical information pattern.

7. The device as set forth in any of Claims 1 to 6, characterized in that said computer system incorporates an RS-232 interface system, and wherein said communication cable means comprises a standard RS-232 cable assembly.

8. For use with a computer system having a data processing unit having at least one input/output (I/O) port adapted for communication with a peripheral device through a communication cable, the I/O port configured to receive a connector member which is adapted to interconnect said I/O port with said communication cable, a software security system characterized by:

electronic circuitry means mounted in said connector member and electrically coupled therewith, said electronic circuitry means including active electronic elements for recognizing a first predetermined electrical information pattern transmitted from said I/O port and for generating and transmitting a second predetermined electrical information pattern to said I/O port in response to said first predetermined electrical information pattern; wherein said second predetermined electrical information pattern may be compared to a validation electrical information pattern established by software the use of which is to be controlled to verify that said software is being operated on an authorized computer system.

9. The device as set forth in Claim 8, characterized in that said active electronic elements are electrically powered by said first predetermined electrical information pattern and function independently of other external sources of electrical power.

10. The device as set forth in Claims 8 or 9, characterized in that said active electronic elements are fabricated from low power integrated circuitry.

11. The device as set forth in any of Claims 8 to 10, characterized in that said electronic circuitry means is mounted in said connector member in a visually undetectable manner without affecting the communication providing function of said cable.

12. The device as set forth in any of Claims 8 to 11, characterized in that said first predetermined electrical information pattern comprises a parallel multiple-bit signal and wherein said second predetermined electrical information pattern comprises a parallel multiple-bit signal different from said first predetermined electrical information pattern.

13. The device as set forth in any of Claims 8 to 12, characterized in that said computer system incorporates a RS-232 interface system, and wherein said communication cable comprises a standard RS-232 cable assembly.

14. A method of restricting the use of selected software to a selected computer system including a data processing unit having an input/output port, a peripheral device and a cable member for electrically connecting said peripheral device to said input/output port of the data processing unit, characterized by the steps of:

generating a first predetermined electrical information pattern;

providing electronic circuitry in said cable member which generates a second predetermained electrical information pattern in response to receipt of said first predetermined electrical information pattern

causing said second predetermined electrical information pattern to be compared to a verification code in the memory of the data processing unit; and

causing said selected software to be rendered inoperative on said data processing unit if said second predetermined electrical information pattern fails to positively compare with said verification code.

15. The method as set forth in Claim 14, characterized in that the providing step is practiced in a manner that said electronic circuitry is visually undetectable within said cable member.

16. The method as set forth in Claim 14 or 15, characterized in that said first predetermined electrical information pattern is a parallel multiple-bit signal, and wherein said second predetermined electrical information pattern is a parallel multiple-bit signal different from said first predetermined electrical information pattern.

17. The method as set forth in any of Claims 14 to 16 characterized by the step of providing said electronic circuitry to function independently of an outside source of electrical power.

18. A software security system for restricting the use of computer software to a preselected computer system having a data processing unit including at least one input/output port, and electrical cable connector means suitable for connecting the at least one input/output port to a communication cable; characterized by:

electronic means for receiving and recognizing a first predetermined electrical information pattern and for returning a second predetermined electrical information pattern in response to receipt of said first predetermined electrical information pattern;

means for causing said first predetermined electrical information pattern to be generated within the computer system and communicated to said electronic means;

means for causing said second predetermined electrical information pattern to be received and verified upon its return from said electronic means; and

means for terminating the performance of said computer software in the absence of receipt and verification of said second predetermined electrical information pattern;

wherein said electronic means is mounted in said electrical cable connector means in a visually undetectable manner without otherwise affecting the function of said cable connector means.

F I G.1

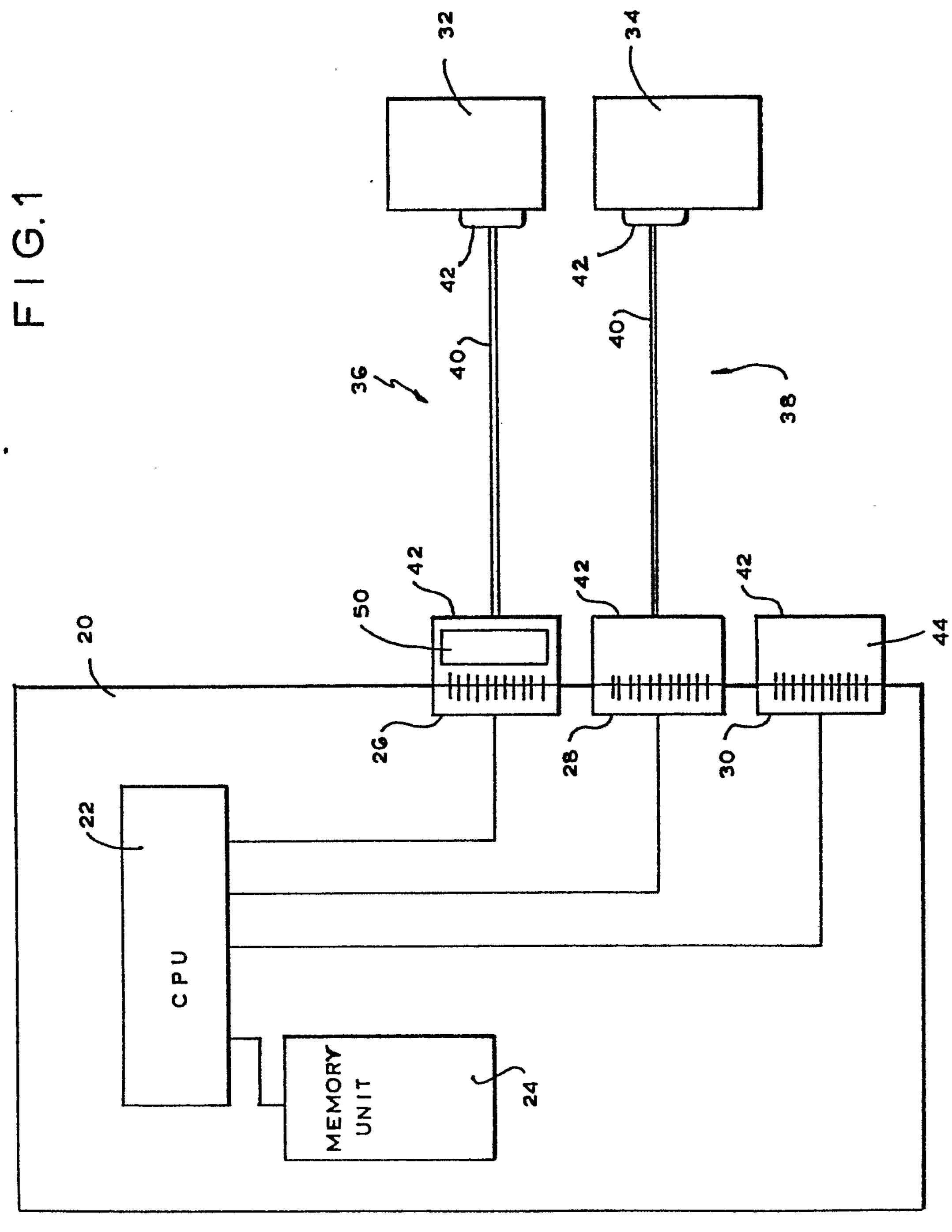

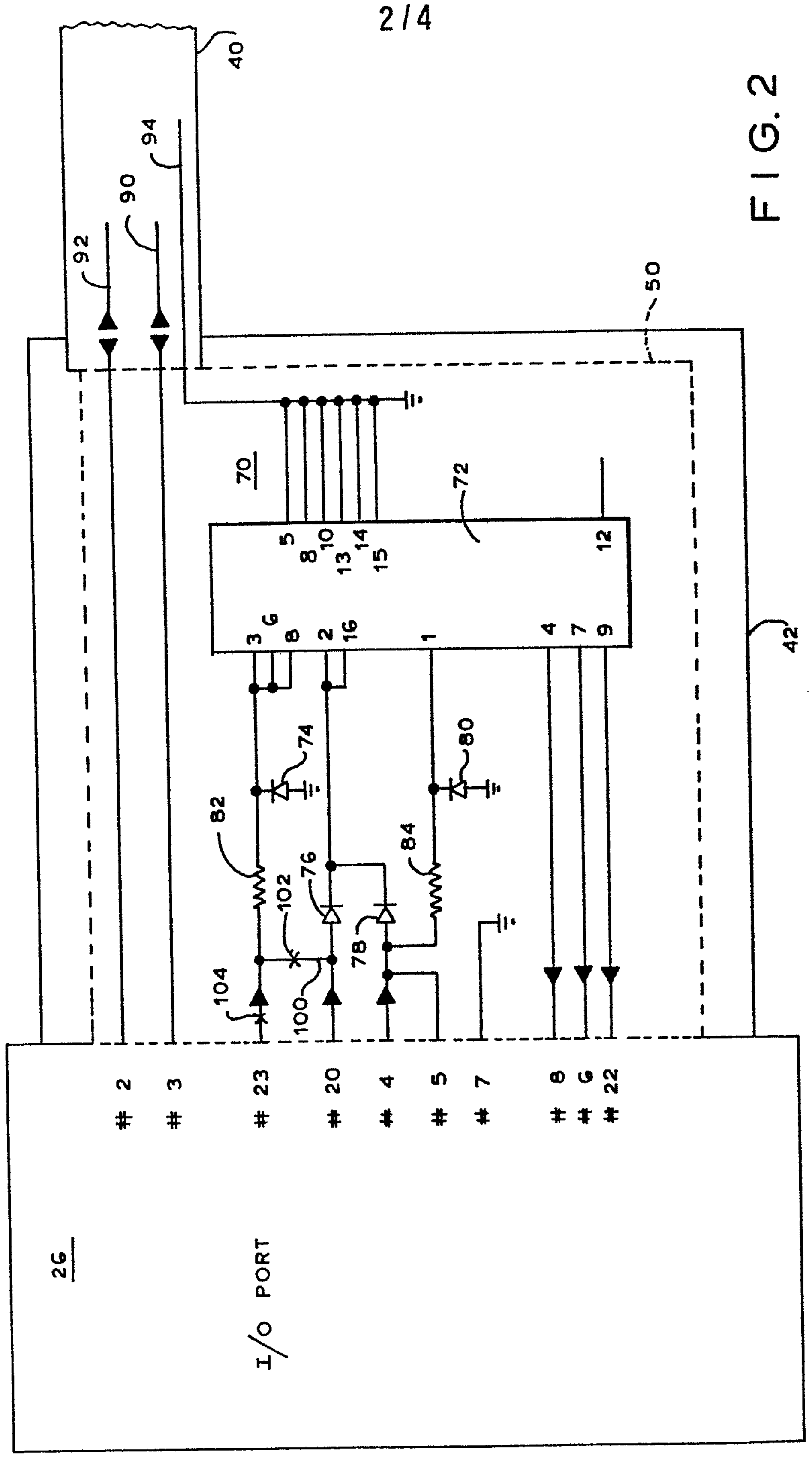
40
94
90
92
50
70
72
5
8
10
13
14
15
12
3
6
8
2
16
1
4
7
9
42
74
80
82
84
76
78
102
104
100
# 2
# 3
# 23
# 20
# 4
# 5
# 7
# 8
# 6
# 22
26
I/O PORT

FIG. 2

FIG. 3

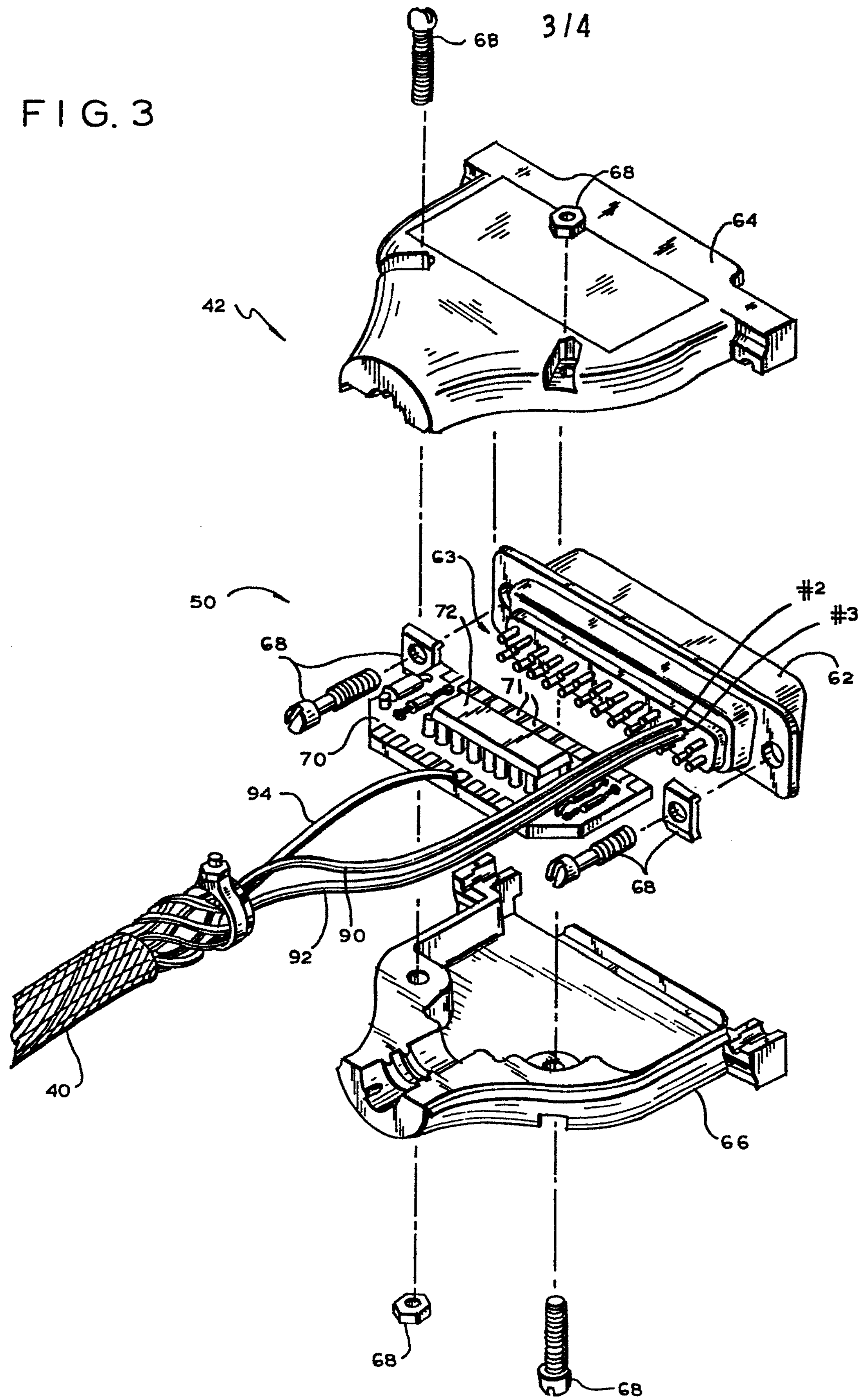

4/4

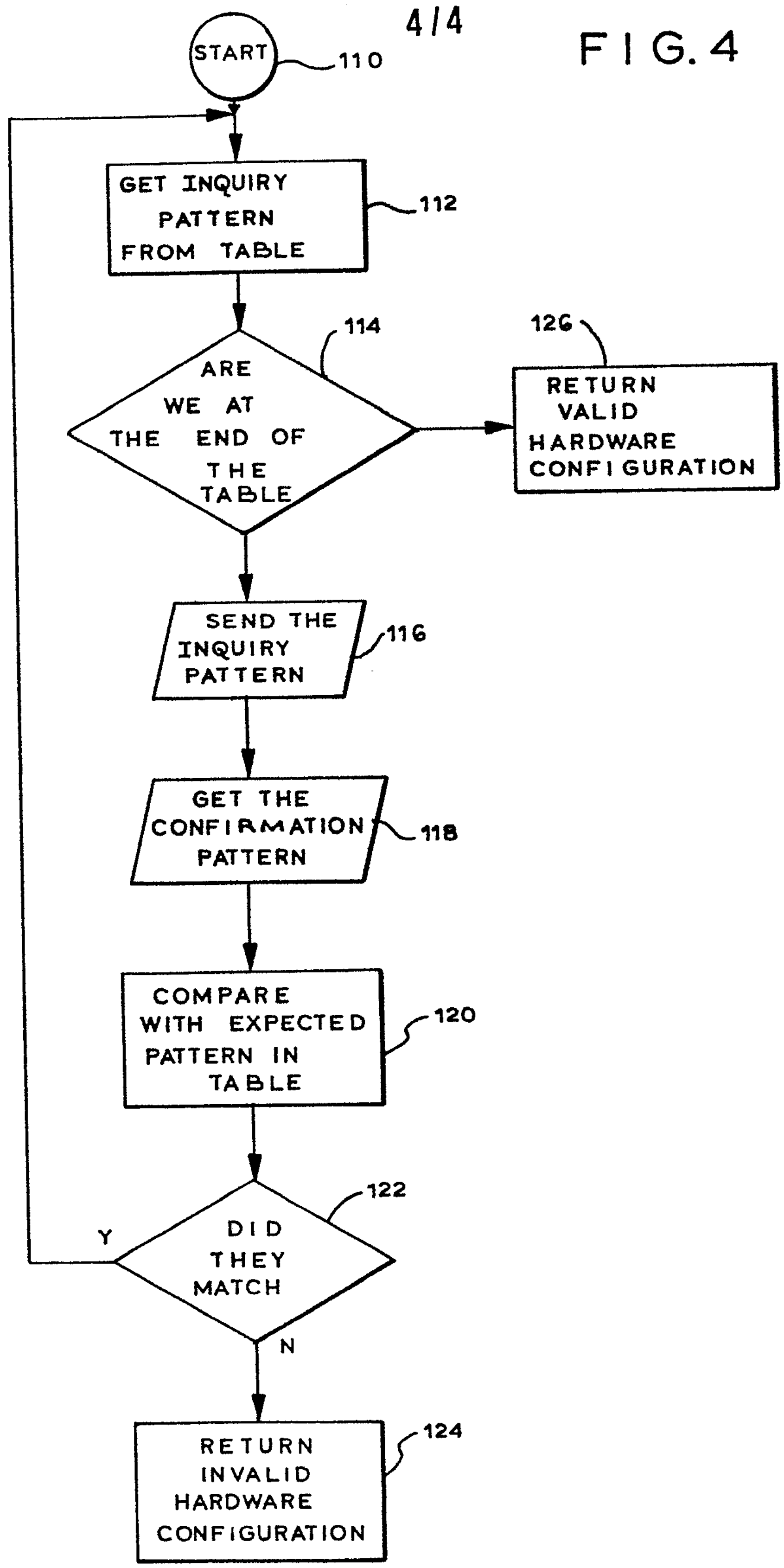
START
110
GET INQUIRY PATTERN FROM TABLE
112
ARE WE AT THE END OF THE TABLE
114
126
RETURN VALID HARDWARE CONFIGURATION
SEND THE INQUIRY PATTERN
116
GET THE CONFIRMATION PATTERN
118
COMPARE WITH EXPECTED PATTERN IN TABLE
120
DID THEY MATCH
122
Y
N
RETURN INVALID HARDWARE CONFIGURATION
124

FIG. 4